(19) Europäisches Patentamt

European Patent Office

Office européen des brevets

(11) Veröffentlichungsnummer: **0 262 526 B1**

(12) **EUROPÄISCHE PATENTSCHRIFT**

(45) Veröffentlichungstag der Patentschrift: **02.05.91**

(21) Anmeldenummer: **87113656.0**

(22) Anmeldetag: **18.09.87**

(51) Int. Cl.⁵: **B65D 25/20**

(54) **Lager- und Transportkasten für Regallager.**

(30) Priorität: **30.09.86 DE 3633171**

(43) Veröffentlichungstag der Anmeldung:
**06.04.88 Patentblatt 88/14**

(45) Bekanntmachung des Hinweises auf die
Patenterteilung:
**02.05.91 Patentblatt 91/18**

(84) Benannte Vertragsstaaten:
**BE DE FR GB NL SE**

(56) Entgegenhaltungen:
**CH-A- 644 811      DE-U- 8 326 738**
**FR-A- 2 234 195     FR-A- 2 294 926**
**FR-A- 2 381 671     FR-A- 2 480 242**
**US-A- 3 672 530**

(73) Patentinhaber: **Fritz Schäfer Gesellschaft mit
beschränkter Haftung
Fritz-Schäfer-Strasse 20
W-5908 Neunkirchen(DE)**

(72) Erfinder: **Schäfer, Gerhard
Oberes Gerstenfeld 2
W-5908 Neunkirchen-Salchendorf(DE)**

(74) Vertreter: **Müller, Gerd et al
Patentanwälte HEMMERICH-
MÜLLER-GROSSE-POLLMEIER-MEY Hammerstrasse 2
W-5900 Siegen 1(DE)**

EP 0 262 526 B1

# Beschreibung

Die Erfindung betrifft einen Lager- und Transportkasten für Regallager mit automatischen Beschickungs- und Entnahmevorrichtungen sowie zugehörigen Transportgeräten und/oder Förderstrecken, bei welchem zwei Längswände und zwei Querwände mit einem Boden einen kastenförmigen Behälter bilden, der bodenseitige Auflage- und Führungselemente für ds Zusammenwirken mit in den Regalen angeordneten Trag- und Führungsschienen aufweist und wenigstens an einer Querwand in Höhe des Bodens mit Eingriffsmitteln für die Einschiebe-und Ausziehorgane der Beschickungs- und Entnahmevorrichtungen versehen ist.

Lager- und Transportkästen dieser Art - sogenannte Schubwannen - sind bereits bekannt. Sie werden regelmäßig aus Stahlblech gefertigt und haben dabei fest mit dem Boden verbundene Längs- und Querwände. An wenigstens einer Querwand, vorzugsweise jedoch an beiden Querwänden sind die bekannten Lager- und Transportkästen in Höhe des Bodens mit Eingriffsmitteln für die Einschiebe- und Ausziehorgane der Beschickungs- und Entnahmevorrichtungen versehen. Diese Eingriffsmittel werden von gesondert gefertigten Profilschienen gebildet, die zumindest mit der Querwand, vorzugsweise aber auch mit den Eckzonen zu den Längswänden und zum Boden hin fest verschweißt sind, damit sie die von den Ausziehorganen der Beschickungs- und Entnahmevorrichtungen ausgeübten Kräfte sicher in den jeweiligen Lager- und Transportkasten einleiten können.

Eine spezielle Bauart für diese aus Stahlblech gefertigten Lager- und Transportkästen gehört dabei bspw. durch das DE-GM 83 26 738 zum Stand der Technik.

Nachteilig bei den bekannten Lager- und Transportkästen der gattungsgemäßen Art ist in jedem Falle, daß zu ihrer Herstellung zunächst ebene Blechzuschnitte vorgefertigt werden müssen, die dann durch Abkant- und/oder Biegevorgänge einer Umformung zu unterwerfen sind sowie dann durch umfangreiche Schweiß- und/oder Nietvorgänge ordnungsgemäß miteinander verbunden werden müssen.

Eine Unzulänglichkeit dieser bekannten Lager- und Transportkästen liegt aber auch darin, daß sie korrosionsanfällig sind und beim Zusammenwirken mit den Beschickungs- und Entnahmevorrichtungen sowie auch den zugeordneten Förderstrecken beträchtliche Geräusche verursachen können.

Ziel der Erfindung ist es, die den bekannten Lager- und Transportkästen gattungsgemäßer Art eigentümlichen Unzulänglichkeiten auszuräumen.

Deshalb liegt der Erfindung die Aufgabe zugrunde, für kastenförmige Behälter bildenden Lager- und Transportkästen einen Aufbau zu schaffen, der sich bei hoher Fertigungspräzision und optimaler Formstabilität auch in großen Stückzahlen einstückig herstellen läßt und dessen Eingriffsmittel für die Einschiebe- und Ausziehorgane der Beschickungs- und Entnahmevorrichtungen dabei auch bei hohem Gewicht der in den Lager- und Transportkästen befindlichen Güter auch hohen Beanspruchungen dauerhaft standhalten, also einer Verformung, Beschädigung oder sogar Zerstörung durch die Einschiebe- und Ausziehorgane entgegenwirkt.

Gelöst wird diese Aufgabe erfindungsgemäß mit den Kennzeichnungsmerkmalen des Anspruchs 1, also dadurch, daß ein einstückiger Spritzgußkörper aus Kunststoff den Boden, die Längswände und die Querwände sowie die an die Querwände außenseitig anschließenden Eingriffsmittel für die Einschiebe- und Ausziehorgane umfaßt, daß dabei die Eingriffsmittel für die Einschiebe- und Ausziehorgane aus im wesentlichen parallel zu den Querwänden liegenden und durch Querstege verstärkten Leisten bestehen, daß weiterhin diese Leisten durch Querrippen und/oder Hohlprofile gegen die Querwände sowie gegebenenfalls auch gegen die Eckzonen von Querwänden und Längswänden abgestrebt sind, daß die Leisten sich nach unten an von den Querwänden etwa horizontal abstehende Auslegerstücke anschließen, die sowohl oberseitig als auch unterseitig durch die Querrippen und/oder Hohlprofile gegen die Querwände abgestrebt sind, daß die Hohlprofile sowohl nach unten als auch nach oben über die Auslegerstücke hinausgeführt sind, während die Querrippen sich lediglich oberhalb dieser Auslegerstücke befinden, und daß die als Versteifungs-Eckholme vorgesehenen Hohlprofile sich lediglich nach oben an die Auslegerstücke anschließen.

Durch die DE-A-30 14 387 ist zwar bereits ein als Spritz-Formteil aus Kunststoff hergestellter Lager-Sichtkasten bekannt, der zur ruhenden Aufbewahrung von Lagergut, bspw. in Regalen, dienen kann, welcher aber auch zum dynamischen Transport von Waren auf Fördermitteln, wie z.B. Rollenbahnen, sowie als Versandbehälter für solche Waren benutzt werden kann.

Ein solcher Lager-Sichtkasten kommt jedoch nicht für die Benutzung bei Regallagern mit automatischen Beschickungs- und Entnahmevorrichtungen in Betracht, weil er den Einwirkungen der an den Einschiebe- und Ausziehorganen vorgesehen Eingriffsmittel zumindest im Dauergebrauch nicht standzuhalten vermag.

Besonders empfehlenswert ist gemäß Anspruch 2 als Weiterbildung der Erfindung, wenn die die Eingriffselemente für die Einschiebe- und Ausziehorgane bildenden und durch Querstege verstärkten Leisten doppelwandig ausgeführt sind.

2

Damit ein seitliches Ein- und Ausfahren der Einschiebe- und Ausziehorgane relativ zu den Eingriffsmitteln möglich ist, sieht Anspruch 3 im Rahmen der Erfindung vor, daß die Leisten und die sie tragenden Auslegerstücke an ihren den Längswänden benachbarten Enden jeweils eine nach der Seitenwand und nach unten gerichtete Öffnung begrenzen.

Aus Stabilitätsgründen erweist es sich ferner als wichtig, daß gemäß Anspruch 4 der Boden unterseitig eine gitterartige Verstärkungsverrippung besitzt. Zum gleichen Zweck kann jedoch gemäß Anspruch 5 der Boden auch von einem ein gleichmäßiges Wellen- oder Sickenprofil aufweisenden Stützblech unterfangen werden, das nahe seinen Längskanten auf einwärts gerichteten Kragleisten der Längswände ruht. Darüber hinaus besteht nach Anspruch 6 aber auch die Möglichkeit, daß der Boden bereichsweise von Rohren oder Profilstäben unterfangen ist, die wenigstens mit ihren Enden in an die Längswände und an den Boden angeformten Hülsenkörpern gehalten sind.

Zur Minderung des Verschleißes beim Zusammenwirken der Lager- und Transportkästen mit den Einschiebe- und Ausziehorganen der Beschickungs- und Entnahmevorrichtungen erweist es sich nach Anspruch 7 weiterhin als wichtig, daß die Innenflächen von Auslegerstück und Leiste sowie die im Bereich der Leiste liegende Außenfläche der Querwände durch ein nach unten offenes Metallprofil verstärkt und geschützt sind, wobei die Begrenzungskanten des Metallprofils in das Kunststoffmaterial eingebettet sind.

Das seitliche Ein- und Ausfahren der Einschiebe- und Ausziehorgane der Beschickungs- und Entnahmevorrichtungen relativ zu den Eingriffsmitteln an den Lager- und Transportkästen wird erfindungsgemäß nach Anspreuch 8 dadurch erleichtert, daß die Innenflächen der Leiste an deren den Längswänden benachbarten Enden mit Abrundungen versehen ist.

Weitere Ausbildungsmerkmale der erfindungsgemäßen Lager- und Transportkästen sind in den Unteransprüchen 9 bis 24 aufgezeigt.

Der Gegenstand der Erfindung ist in der Zeichnung in einem Ausführungsbeispiel dargestellt. Dabei zeigen

| Figur 1 | in räumlicher Darstellung einen Ausschnittbereich aus einem automatischen Kleinteilelager und einer zugehörigen Beschickungs- und Entnahmevorrichtung, |
| Figur 2 | in räumlicher Ansichtsdarstellung den Gesamtaufbau eines Lager- und Transportkastens, |
| Figur 3 | einen Schnitt entlang der Linie III-III in Fig. 2, |
| Figur 4 | eine Teilansicht eines Lger- und Transportkastens in Pfeilrichtung IV der Fig. 3, |
| Figur 5 | einen Schnitt entlang der Linie V-V in Fig. 3, |
| Figur 6 | einen Schnitt entlang der Linie VI-VI in Fig. 3, |
| Figur 7 | einen Teilquerschnitt durch zwei unmittelbar aufeinander gestapelte Lager- und Transportkästen, |
| Figur 8 | eine Teilansicht ähnlich der Figur 4 bei gegenüber dieser etwas abgewandelter Bauart, |
| Figur 9 | in größerem Maßstab den linken Eckbereich der Fig. 8, |
| Figur 10 | in räumlicher Teilansicht einen gegenüber der Fig. 2 baulich etwa abgewandelten Lager- und Transportkasten, |
| Figur 11 | in räumlicher Teilansicht und im Querschnitt eine andere Weiterbildung eines Lager- und Transportkastens, |
| Figur 12 | einen Teilquerschnitt durch einen Lager- und Transportkasten nach Fig. 1 und |
| Figur 13 | in räumlicher Prinzipdarstellung eine gegenüber den Figuren 11 und 12 abgewandelte Konzeption eines stabilisierten Bodenbereichs für einen Lager- und Transportkasten. |

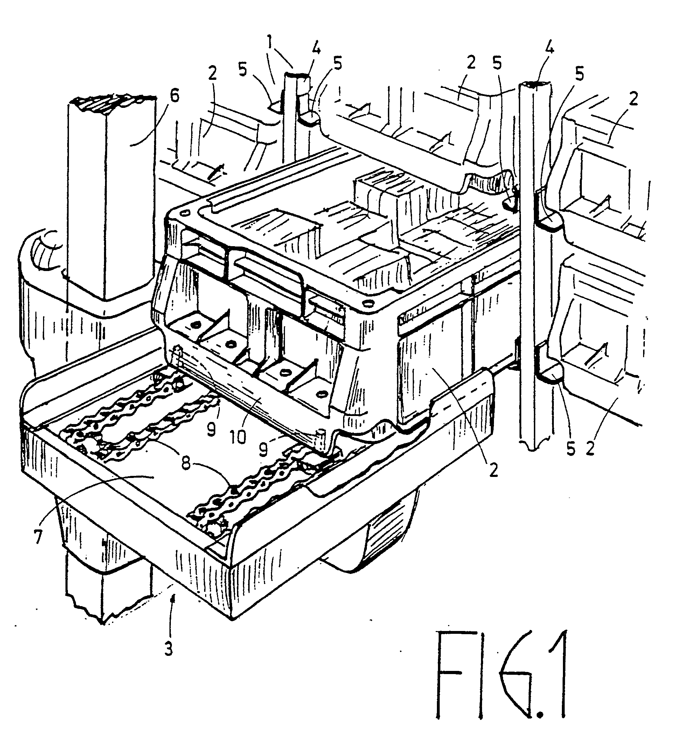

In Fig. 1 der Zeichnung ist ein Ausschnittbereich aus einem automatischen Kleinteilelager zu sehen, das mindestens ein Hochregal 1 zur Aufnahme einer Vielzahl von Lager- und Transportkästen 2 und eine Beschickungs- und Entnahmevorrichtung 3 für einzelne Lager- und Transportkästen 2 umfaßt.

Das Hochregal 1 wird dabei im wesentlichen von vertikalen Pfosten 4 sowie jeweils daran befestigten Trag- und Führungsschienen 5 für die Lager- und Transportkästen 2 gebildet.

Die Beschickungs- und Entnahmevorrichtung 3 umfaßt mindestens eine vertikale Säule 6, die sich in Horizontalrichtung in den Bereich der einzelnen Regalabschnitte fahren läßt und welche als Führung für einen Hubtisch 7 dient, damit dieser in den Bereich der einzelnen Regalfächer gestellt werden kann. Der Hubtisch 7 trägt dabei einen oder mehrere Kettenförderer 8, die als Einschiebe- und Ausziehorgane für einzelne Lager- und Transportkästen 2 dienen und zu diesem Zweck jeweils mindestens einen Mitnehmer 9 tragen, welcher mit an den Lager- und Transportkästen vorgesehenen Eingriffsmitteln 10 in und außer Wirkverbindung treten kann.

Die in Fig. 1 der Zeichnung gezeigten beiden Kettenförderer 8 arbeiten mit vertikaler Einbauebene, d.h., die beiden Kettentrums laufen mit Abstand übereinander. Selbstverständlich ist es aber auch denkbar, Kettenförderer 8 mit horizontaler Arbeitsebene auf dem Hubtisch 7 vorzusehen, so daß ihre beiden Kettentrums jeweils mit Abstand nebeneinander laufen.

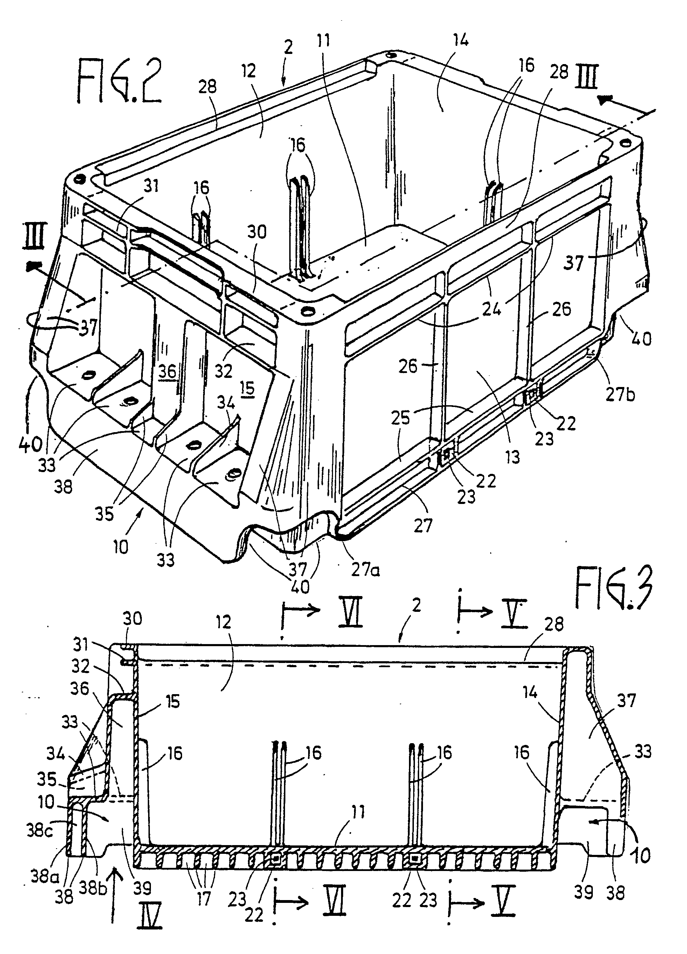

In den Fig. 2 und 3 ist in räumlicher Ansichtsdarstellung und im Längsschnitt ein Lager- und Transportkasten 2 zu sehen. Er weist einen Boden 11 sowie zwei Längswände 12 und 13, wie auch zwei Querwände 14 und 15 auf. Insgesamt ist der Lager- und Transportkasten 2 als einstückiger Spritzgußkörper aus Kunststoff ausgeführt, d.h., der Boden 11, die Längswände 12 und 13 sowie die Querwände 14 und 15 sind in einem einzigen Arbeitsgang in einer entsprechenden Spritzform gefertigt. Dadurch lassen sich die Lager- und Transportkästen in großer Stückzahl mit hoher Präzision als kastenförmige Behälter herstellen.

An ihrer Innenfläche sind der Boden 11, die Längswände 12 und 13 sowie auch die Querwände 14 und 15 im wesentlichen glatt und eben ausgeführt. Lediglich Lager- und Transportkästen, die durch längs- und/oder querverlaufende Trennwände in mehrere kleinere Lagerzonen unterteilt werden sollen, können innenseitig paarweise angeformte, aufrechte Stege 16 erhalten, zwischen die sich von oben her die Trennwände bedarfsweise einstecken lassen.

Unterseitig kann der Boden 11 eine Verstärkungsverrippung 17 aufweisen, wie das besonders deutlich in den Fig. 3 bis 5 sowie 8 und 9 zu sehen ist. Dabei kann die Verstärkungsverrippung in einem sich jeweils an die Längswände 12 und 13 sowie die Querwände 14 und 15 anschließenden Bereich die Form eines Versteifungsrahmens 18 aufweisen, der über eine vorbestimmte Breite 19 mit auf gleicher Ebene liegenden, planparallelen Stütz- und/oder Laufflächen versehen ist, während das sich an diesen Versteifungsrahmen 18 anschließende Bodenmittelfeld 20 unterseitig mit konkav gewölbt verlaufender Verstärkungsverrippung 21 versehen werden kann, wie das in Fig. 5 bezüglich des Querschnitts eines Lager-und Transportkastens 2 gezeigt ist.

Sowohl im Bereich des Versteifungsrahmens 18 als auch im Bereich des Bodenmittelfeldes 20 besteht die Verstärkungsverrippung 17 bzw. 21 aus einem von hochkant stehenden Flachstegen gebildeten Gitterwerk. Die Flachstege dieses Gitterwerks verlaufen dabei sowohl im Bereich des Versteifungsrahmens 18 als auch im Bereich des Bodenmittelfeldes 20 jeweils rechtwinklig zueinander. Außerdem können aber im Gitterwerk des Versteifungsrahmens 18 zusätzlich noch Diagonalstege ausgebildet werden, wie das bspw. in den Fig. 4, 8 und 9 zu sehen ist.

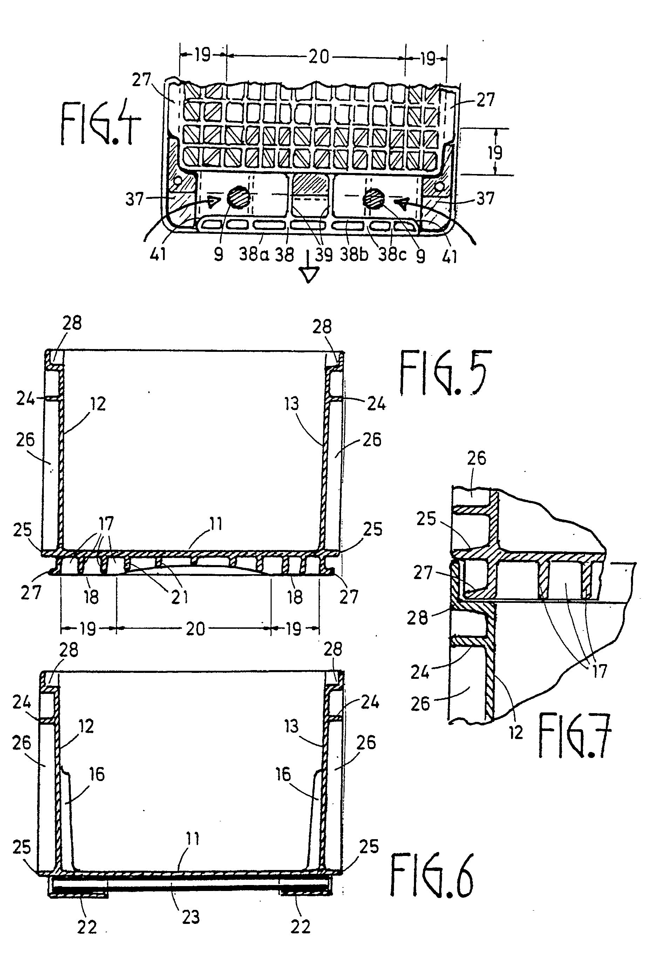

Die Fig. 2, 3 und 6 lassen darüber hinaus noch erkennen, daß an der Unterseite des Bodens 11 - über die Höhe der Verstärkungsverrippung 17 hinweg - auch noch Einschub- bzw. Durchsteckkanäle 22 angeformt werden können, in die quer zur Längsrichtung des Lager- und Transportkastens 2 zusätzliche Versteifungsprofile 23, bspw. Rohre oder Profilstäbe eingesetzt werden können, die den Boden 11 zusätzlich unterfangen. Gemäß Fig. 3 befinden sich dabei die als Hülsenkörper gestalteten Einschub- bzw. Durchsteckkanäle 22 jeweils im Bereich der an der Innenseite der Längswände 12 und 13 vorgesehenen aufrechten Rippenpaare 16, so daß dort die Versteifungsprofile 23 quer zur Kasten-Längsrichtung wirksam werden.

Den Fig. 2 und 5 bis 7 kann entnommen werden, daß jeder Lager- und Transportkasten 2 an seinen beiden Längswänden 12 und 13 außenseitig mit Verstärkungsrippen 24, 25 und 26 versehen ist, wobei die Verstärkungsrippen 24 und 25 horizontal verlaufen, während sich die Verstärkungsrippen 26 in Vertikalrichtung erstrecken.

Unterhalb des Bodens 11, nämlich an der Unterkante des von den Verstärkungsrippen 17 gebildeten Rahmens 18 ist jeder Lager- und Transportkasten 2 noch mit nach auswärts gerichteten, horizontalen Stegen 27 versehen, die sich dabei nur über eine Teillänge des Bodens 11 bzw. der Längswände 12 und 13 hinweg erstrecken, wie das deutlich die Fig. 2 zeigt. Die Endabschnitte 27a und 27b der Stege 27 sind dabei mit aufwärts bis gegen den Steg 25 verlaufenden Abrundungen versehen, wie das ebenfalls die Fig. 2 deutlich macht.

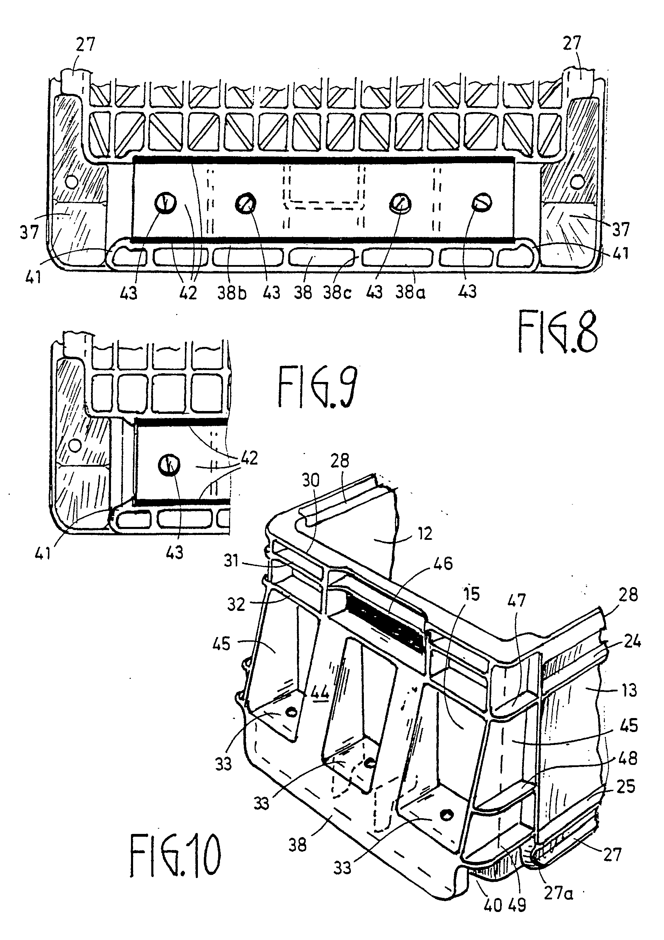

In den Fig. 5 und 7 ist zu sehen, daß der horizontale Steg 27 eine geringere Breite aufweist als die darüber gelegene, parallel zu ihm verlaufende Versteifungsrippe 25.

Der obere Rand der beiden Längswände 12 und 13 jedes Lager-und Transportkastens 2 wird jeweils von einer nach außen vorkragenden Winkelkante 28 gebildet, die sich über einen Längenabschnitt erstreckt, welcher mit dem Längenabschnitt zusammenfällt, über welchen hinweg die horizontalen Stege 27 mit ihren Endabschnitten 27a und 27b verlaufen.

Die Winkelkanten 28 an der Oberkante der beiden Längswände 12 und 13 bilden eine Stapelstufe, mit welcher der horizontale Steg 27 eines nächstoberen Lager- und Transportkastens 2 als Stapeleingriff zusammenwirken kann (Fig 5), wenn mehrere solcher Lager- und Transportkästen 2 unmittelbar übereinandergesetzt werden sollen. Dabei ist ersichtlich, daß der Abstand zwischen der Unterseite des Steges 27 und der Unterseite der horizontalen Versteifungsrippe 25 gleich der lichten Höhe des aufrechten Flansches der Winkelkante 28 ist und daher eine doppelte Abstützung des nächstoberen Lager- und Transportkastens 2 über den Steg 27 und die Verstärkungsrippe 25 an der Winkelkante 28 erreicht werden kann. Zweckmäßig ist jedoch der lichte Abstand zwischen dem horizontalen Steg 27 und der dazu parallelen Verstärkungsrippe 25 etwas größer bemessen als die übliche Querschnittshöhe der Gabelschenkel eines für den Transport von Lager-und Transportkästen 2 zum Einsatz gelangenden Gabelhubwagens. Für diesen Fall ist es des weiteren wichtig, daß die Verstärkungsrippe 25 durch die vertikalen Verstärkungsrippen 26 nicht nur gegen die horizontale Verstärkungsrippe 24, sondern darüber hinaus auch bis gegen die Winkelkante 28 am oberen Rand der Längswände 12 und 13 abgestützt ist.

Die Querwände 14 und 15 jedes Lager- und Transportkastens haben an ihrer Außenseite mehrere, bspw. drei mit Abstand übereinanderliegende Verstärkungsrippen 30, 31 und 32, wie das die Fig. 2, 3 und 10 erkennen lassen.

Mit beträchtlichem Abstand unterhalb der unteren Verstärkungsrippe 32 schließt sich an jede der Querwände 14 und 15 ein etwa horizontal abstehendes Auslegerstück 33 an, welches beim Ausführungsbeispiel nach Fig. 2 einerseits durch Querrippen 34 und 35 sowie andererseits durch ein Hohlprofil 36 nach oben gegen die Querwände 14 und 15 abgestrebt ist. Zur zusätzlichen Stabilisierung jedes Auslegerstückes 33 dienen darüber hinaus noch als Hohlprofile gestaltete Eckholme 37, welche jeweils eine Eckzone zwischen einer Längswand 12 bzw. 13 und einer Querwand 14 bzw. 15 mit gewissem Abstand umgeben, wie das den Fig. 4, 8 und 9 besonders deutlich zu entnehmen ist.

Nach abwärts schließt sich an jedes der Auslegerstücke 33 eine Leiste 38 an, die sich wenigstens annähernd über die gesamte Breite der Querwände 14 und 15 erstreckt und das eigentliche Eingriffsmittel 10 für die Einschiebe- und Ausziehorgane, bspw. die Mitnehmer 9, der Beschickungs- und Entnahmevorrichtung 3 bilden. Diese Leiste 38 ist dabei entweder insgesamt sehr dickwandig ausgeführt oder aber sie besteht aus zwei im wesentlichen parallelen Wänden 38a und 38b, die gegeneinander durch Querrippen 38c abgesteift sind, wie das die Fig. 3, 4 sowie 8 und 9 deutlich erkennen lassen.

Als wichtig hat es sich dabei erwiesen, daß zumindest die seitlichen Begrenzungswände des Hohlprofils 36 nach abwärts über das Auslegerstück 33 durchgeführt sind, dergestalt, daß sie zwischen dem Auslegerstück 33 und der Leiste 38 noch zusätzliche Versteifungsrippen 39 bilden können, wie das die Fig. 4 erkennen läßt.

Im Übergangsbereich zwischen der Leiste 38 und den die Eckholme 37 bildenden Hohlprofile befinden sich Ausschnitte 40 (Fig. 2), die so angeordnet sind, daß die als Einschiebe-und Ausziehorgane der Beschickungs- und Entnahmevorrichtungen wirksamen Mitnehmer 9 auch von der Seite her problemlos hinter die Leiste 38 der Eingriffsmittel 10 eingefahren werden können, wie dies in Fig. 4 durch die eingezeichneten Pfeile verdeutlicht ist. Eine solche Ein- und Ausfahrbewegung der Einschiebe- und Ausziehorgane kommt bspw. dann vor, wenn - im Unterschied zur Fig. 1 - die Kettenförderer 8 nicht mit vertikaler, sondern mit horizontaler Umlaufebene arbeiten.

Damit in diesem Falle die Ein- und Ausfahrbewegung der Mitnehmer 9 oder dergleichen erleichtert wird, sind vorteilhaft die Endabschnitte der Leiste 38 jeweils mit einer Abrundung 41 versehen, wie das deutlich aus den Fig. 4, 8 und 9 erkennbar ist.

Die Fig. 8, 9 und 12 zeigen darüber hinaus, daß es in vielen Fällen vorteilhaft ist, wenn die Innenflächen des Auslegerstücks 33 und der Leiste 38 sowie auch die Außenfläche der Querwände 14 und 15 im Bereich der Leiste 38 gegen Verschleiß und/oder Beschädigung durch ein eingesetztes Metallprofil 42 verstärkt und geschützt werden. Das Metallprofil 42 ist dabei vorzugsweise als nach unten offenes U-Profil ausgeführt. Dieses läßt sich unmittelbar beim Spritzgießvorgang in den vorgesehenen Einbaubereich einformen. Es kann aber auch nachträglich, bspw. durch Verschraubungen 43, eingesetzt werden. In jedem Falle ist es aber wichtig, die Anordnung des Metallprofils 42 so zu treffen, daß seine Begrenzungskanten allseitig in das Kunststoffmaterial eingebettet, bzw. von diesem zumindest bündig eingefaßt sind, also keinerlei Schnittkanten freiliegen.

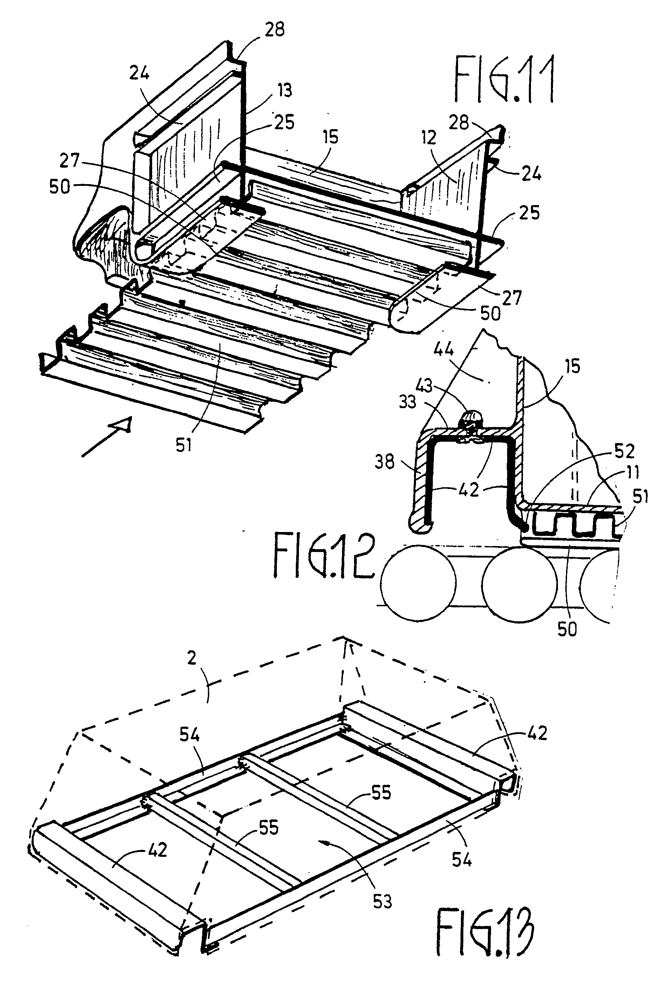

In Fig. 10 ist ein Lager- und Transportkasten 2 gezeigt, welcher gegenüber der Ausführungsform nach den Fig 2 bis 9 eine etwas abgewandelte Ausgestaltung der Querwände 14 und 15 hat. Dort sind nämlich jeweils die die Leisten 38 tragenden Ausleger 33 einerseits durch ein oder mehrere Hohlprofile 44 sowie andererseits durch Rippen 45 gegen die Querwände 14 bzw. 15 abgesteift. Dabei liegen die Rippen 45 in gleicher Ebene mit den beiden Längswänden 12 und 13, während die Hohlprofile 44 in gleichmäßiger Verteilung zwischen den Rippen 45 ausgebildet sind.

Auch bei den Hohlprofilen 44 sind deren seitliche Begrenzungswände nach abwärts über die Auslegerstücke 33 heruntergeführt, so daß sie dort die Leiste 38 zusätzlich gegen die Querwände 14 bzw. 15 absteifen können, wie das auch beim Lager- und Transportkasten 2 nach den Fig. 2 bis 9 der Fall ist. Erwähnenswert ist noch, daß beim Lager- und Transportkasten 2 nach Fig. 10 in den Querwänden 14 und 15, und zwar im Bereiche zwischen den horizontalen Verstärkungsrippen 31 und 32 jeweils eine Grifföffnung 46 ausgebildet ist, und daß die Rippen 45 jeweils noch durch mehrere horizontale Rippen 47, 48, 49 querversteift werden können.

Aus den Fig. 11 und 12 ist noch ersichtlich, daß der Boden 11 der Lager- und Transportkästen 2 nicht unbedingt durch ein Gitterwerk von hochkant stehenden Flachstegen 17 und 21 stabilisiert werden muß. Vielmehr besteht statt dessen auch die Möglichkeit, im Anschluß an die horizontalen Stege 27 einstückig nach einwärts gerichtete Kragleisten 50 anzuformen sowie in den zwischen diesen und der Unterseite des Bodens 11 gebildeten Zwischenraum ein Stützblech 51 in Längsrichtung einzuschieben, welches mit einem quer gerichteten Wellen- oder Sickenprofil versehen ist und mit seinen quer dazu gerichteten Randkanten auf den Kragleisten 50 ruht. Von diesem Stützblech 41 wird dann der Boden 11 stabilisierend unterfangen.

Damit sich das Stützblech 51 nicht in unerwünschter Weise verschieben kann, ist es möglich, die in den Freiraum zwischen den Auslegerstücken 33 und den Leisten 38 sowie der Querwand 14 bzw. 15 eingesetzten Metallprofile 42 mit einem Verlängerungsabschnitt 52 zu versehen, der als Sicherungselement in den Einbaubereich für das Stützblech 51 hineinragt und dieses gegen Verschieben sichert, wie das die Fig. 12 erkennen läßt.

Schließlich ist in Fig. 13 noch ein Versteifungsrahmen 53 zu sehen, der zur Stabilisierung des Bodens 11 der Lager- und Transportkästen benutzt werden kann, wenn dieser nicht mit einer unterseitigen Versteifungsverrippung versehen wird. Dieser Versteifungsrahmen 53 umfaßt dabei zwei im Querschnitt winkelförmige Längsholme 54, zwei diese miteinander verbindende Querstreben 55 sowie zwei Metallprofile 42, wie sie zur Stabilisierung der Auslegerstücke 33 und der Leiste 38 an den Querwänden 14 und 15 der Lager- und Transportkästen 2 benutzt werden. Ausschließlich mit Hilfe der beiden Metallprofile 42 wird dabei der Versteifungsrahmen 53 mit dem jeweiligen Lager-und Transportkasten verbunden, und zwar mit Hilfe von Verschraubungen 43, wie sie in den Fig. 8, 9 und 12 zu sehen sind.

## Ansprüche

1. Lager- und Transportkasten für Regallager mit automatischen Beschickungs- und Entnahmevorrichtungen sowie zugehörigen Transportgeräten und/oder Förderstrecken, bei welchem zwei Längswände und zwei Querwände mit einem Boden einen kastenförmigen Behälter bilden, der bodenseitige Auflage- und Führungselemente für das Zusammenwirken mit in den Regalen angeordneten Trag- und/oder Führungsschienen aufweist und wenigstens an einer Querwand in Höhe des Bodens mit Eingriffsmitteln für die Einschiebe- und Ausziehorgane der Beschickungs- und Entnahmevorrichtungen versehen ist,
**dadurch gekennzeichnet,**
daß ein einstückiger Spritzgußkörper aus Kunststoff den Boden (11), die Längswände (12, 13) und die Querwände (14, 15) sowie die an die Querwände (14, 15) außenseitig anschließenden Eingriffsmittel für die Einschiebe- und Ausziehorgane umfaßt,
daß dabei die Eingriffselemente (10) für die Einschiebe-und Ausziehorgane (8, 9) aus im wesentlichen parallel zu den Querwänden (14, 15) liegenden und durch Querstege 38c) verstärkten Leisten (38) bestehen,
daß weiterhin diese Leisten (38) durch Querrippen (33, 34, 39; 45) und/oder Hohlprofile (36, 37; 44) gegen die Querwände (14, 15) sowie gegebenenfalls auch gegen die Eckzonen von Querwänden (14, 15) und Längswänden (12, 13) abgestrebt sind,
daß die Leisten (38) sich nach unten an von den Querwänden (14, 15) etwa horizontal abstehende Auslegerstücke (33) anschließen, die sowohl oberseitig als auch unterseitig durch die Querrippen (34, 35, 39; 45) und/oder die Hohlprofile (36, 37;; 44) gegen die Querwände (14, 15) abgestrebt sind,
daß die Hohlprofile (36; 44) sowohl nach unten als auch nach oben über die Auslegerstücke (33) hinaus-geführt sind, während die Querrippen (34, 35; 45) sich lediglich oberhalb dieser Auslegerstücke befinden,
und daß die als Versteifungs-Eckholme vorgesehenen Hohlprofile (37) sich lediglich nach oben an die Auslegerstücke (33) anschließen.

2. Lager- und Transportkasten nach Anspruch 1,
**dadurch gekennzeichnet,**
daß die durch die Querstege (32) verstärkten Leisten (38) mindestens doppelwandig (38a, 38b) ausgebildet sind.

3. Lager- und Transportkasten nach einem der Ansprüche 1 bis 2,
**dadurch gekennzeichnet,**
daß die Leisten (38) und die sie tragenden Auslegerstücke (33) an ihren den Längswänden (14, 15) benachbarten Enden jeweils eine nach der Seite und nach unten gerichtete Öffnung (40) begrenzen.

4. Lager- und Transportkasten nach einem der Ansprüche 1 bis 3,
**dadurch gekennzeichnet,**
daß der Boden (11) unterseitig eine gitterartige Verstärkungsverrippung (17, 21) aufweist.

5. Lager- und Transportkasten nach einem der Ansprüche 1 bis 3, **dadurch gekennzeichnet,** daß der Boden (11) von einem ein gleichmäßiges Wellen-oder Sickenprofil aufweisenden Stützblech (51) unterfangen ist, das nahe seinen Längskanten auf einwärts gerichteten Tragleisten (50) der Längswände (12, 13) ruht (Fig. 11 und 12).

6. Lager- und Transportkasten nach einem der Ansprüche 1 bis 4, **dadurch gekennzeichnet,** daß der Boden (11) bereichsweise von Rohren oder Profilstäben (23) unterfangen ist, die wenigstens mit ihren Enden in an die Längswände (11, 12) und an den Boden (11) angeformten Hülsenkörpern (22) gehalten sind (Fig. 2, 3 und 6).

7. Lager- und Transportkasten nach einem der Ansprüche 1 bis 6, **dadurch gekennzeichnet,** daß die Innenflächen von Auslegerstück (33) und Leiste (38) sowie die im Bereich der Leiste (38) liegende Außenfläche der Querwände (14, 15) durch ein nach unten offenes Metallprofil (42) verstärkt und geschützt sind, wobei die Begrenzungskanten des Metallprofils (42) in das Kunststoffmaterial eingebettet sind (Fig. 8, 9 und 12).

8. Lager- und Transpsortkasten nach einem der Ansprüche 1 bis 7, **dadurch gekennzeichnet,** daß die Innenfläche der Leiste (38) an deren den Längswänden (12, 13) benachbarten Enden mit Abrundungen (41) versehen ist (Fig. 4, 8 und 9).

9. Lager- und Transportkasten nach Anspruch 4, **dadurch gekennzeichnet,** daß der Boden (11) an seiner Unterseite einen sich an die Längswände (12, 13) und Querwände (14, 15) anschließenden Versteifungsrahmen (18) aufweist, der über eine vorbestimmte Breite (19) mit auf gleicher Ebene liegenden, planparallelen Stütz- und/oder Laufflächen versehen ist, während das sich an diesen Versteifungsrahmen (18) anschließende Bodenmittelfeld (20) unterseitig mit konkav gewölbt verlaufenden Verstärkungsrippen (21) ausgestattet ist (Fig 5).

10. Lager- und Transportkasten nach einem der Ansprüche 4 und 9, **dadurch gekennzeichnet,** daß sowohl der Versteifungsrahmen (18) als auch die Versteifungsrippen (21) im Bodenmittelfeld (20) von einem Gitterwerk aus hochkant stehenden Flachstegen gebildet ist.

11. Lager- und Transportkasten nach einem der Ansprüche 4, 9 und 10, **dadurch gekennzeichnet,** daß die Stege der Versteifungsverrippung (17) im Bereich des Versteifungsrahmens (18) und die Stege der Versteifungsverrippung (21) des Bodenmittelfeldes rechtwinklig zueinander verlaufen und daß außerdem im Gitterwerk des Versteifungsrahmens (18) noch Diagonalstege ausgebildet sind (Fig. 4, 8 und 9).

12. Lager- und Transportkasten nach einem der Ansprüche 4 und 9 bis 11, **dadurch gekennzeichnet,** daß der Versteifungsrahmen (18) mit seinen Flachstegen einstückig an die Unterseite des Bodens (11) angeformt ist.

13. Lager- und Transportkasten nach einem der Ansprüche 4 und 6 sowie 9 bis 12, **dadurch gekennzeichnet,** daß die Einschub- bzw.Durchsteckkanäle oder Hülsenkörper (22) zur Aufnahme der Versteifungsprofile (23) zusätzlich zum Versteifungsrahmen (18) vorgesehen sind.

14. Lager- und Transportkasten nach einem der Ansprüche 1 bis 13, **dadurch gekennzeichnet,** daß die Längswände (12, 13) mit Abstand von ihrem oberen Rand mit mindestens einer horizontal verlaufenden Verstärkungsrippe (24) versehen sind und im Bereich ihres Bodens mindestens zwei horizontale, parallel verlaufende Versteifungsrippen bzw. Stege (25 und 27) haben (Fig. 2, 5 und 7).

15. Lager- und Transportkasten nach einem der Ansprüche 1 bis 14, **dadurch gekennzeichnet,** daß die Versteifungsrippen (24) eine Steghöhe haben, die mindestens gleich der Höhe der im Bereich des Bodens (11) liegenden Versteifungsrippe (25) ist (Fig. 5 bis 7).

16. Lager- und Transportkasten nach einem der Ansprüche 1 bis 15, **dadurch gekennzeichnet,** daß über die ganze Höhe der Längswände (12, 13) mehrere vertikal-parallel verlaufende Versteifungsrippen (26) vorgesehen sind, wobei deren Steghöhe jeweils mindestens der Steghöhe der benachbarten horizontalen Verstärkungsrippen (24 und 25) entspricht.

17. Lager- und Transportkasten nach einem der Ansprüche 1 bis 16, **dadurch gekennzeichnet,** daß die Querwände (14, 15) an ihrem oberen Rand außenseitig mit Versteifungsrippen (30, 31, 32) versehen sind, die etwa auf gleicher Ebene liegende vertikale Stirnflächen haben.

18. Lager- und Transportkasten nach einem der Ansprüche 1 bis 17, **dadurch gekennzeichnet,** daß wenigstens die Längswände (13, 14) innenseitig am oberen Rand mit einer Stapelstufe (28) versehen sind.

19. Lager- und Transportkasten nach Anspruch 18, **dadurch gekennzeichnet,** daß sowohl am Boden (11) als auch an den Oberkanten der Längswände (12, 13) Stapelstufen (27 und 28) vorgesehen sind, die im Bodenbereich aus nach außen vorstehenden Stegen (25, 27) und im oberen Längswandbereich aus nach außen vorkragenden Winkelkanten (28) bestehen, wobei die Stapelränder (27 und 28) beim Aufeinandersetzen zweier Kästen (2) ineinandergreifen und wobei die Winkelkanten (28) um die Höhe der Versteifungsrippen vorkragen sowie oberhalb des Steges (27) mit Abstand von diesem in der Bodenebene ein weiterer horizontaler Steg (25) angeordnet ist.

20. Lager- und Transportkasten nach Anspruch 19, **dadurch gekennzeichnet,** daß die unteren Begrenzungskanten des Steges (27) und der Verstärkungsrippe (25) einen Abstand voneinander haben, welcher gleich der Profilhöhe der Winkelkanten (28) ist (Fig. 7).

21. Lager- und Transportkasten nach einem der Ansprüche 19 und 20, **dadurch gekennzeichnet,** daß die Breite der Verstärkungsrippe (25) mindestens der Gesamtbreite der Winkelkanten (28) entspricht (Fig. 7).

22. Lager- und Transportkasten nach einem der Ansprüche 19 bis 21, **dadurch gekennzeichnet,** daß der lichte Abstand zwischen dem Steg (27) und der darüber gelegenen Verstärkungsrippe (25) größer als die Querschnittshöhe der Gabelschenkel eines Gabelhubwagens bemessen ist.

23. Lager- und Transportkasten nach einem der Ansprüche 19 bis 22, **dadurch gekennzeichnet,**

daß die obere Begrenzung des bodenseitigen Stapelrandes von der horizontalen Versteifungsrippe (25) gebildet ist (Fig. 7).

24. Lager- und Transportkasten nach einem der Ansprüche 19 bis 23, **dadurch gekennzeichnet,** daß die horizontale Verstärkungsrippe (25) durch mehrere vertikale Verstärkungsippen (26) bis gegen die Winkelkante (28) der oberen Stapelstufe abgstützt ist (Fig. 2, 5 und 6).

## Claims

1. A storage and transport box for rack storage having automatic loading and removal mechanisms as well as associated transport apparatus and/ or conveyor tracks, in which two longitudinal walls and two crosswalls form with a bottom a box-shaped container which exhibits bearer and guide elements next the bottom for cooperation with carrier and/or guide rails arranged in the racks and is provided on at least one crosswall at the level of the bottom with means of engagement of the push-in and pull-out members of the loading and removal mechanisms, **characterized in that** a onepiece injection-moulded body of plastics comprises the bottom (11), the longitudinal walls (12, 13) and the crosswalls (14, 15) as well as the means, adjoining the crosswalls (14, 15) on the outside, of engagement of the push-in and pull-out members that moreover the means (10) of engagement of the push-in and pull-out members (8, 9) consist of fillets (38) lying essentially parallel with the crosswalls (14, 15) and strengthened by crosswebs (38c), that furthermore these fillets (38) are braced by crossribs (33, 34, 39; 45) and/or hollow profiles (36, 37; 44) against the crosswalls (14, 15) as well as against the corner zones of the crosswalls (14, 15) and longitudinal walls (12, 13) that the fillets (38) are connected near the bottom to crosspieces (33) which stand out approximately horizontally from the crosswalls (14, 15) and are braced against the crosswalls (14, 15) both above and below by the crossribs (34, 35, 39; 45) and/or the hollow profiles (36, 37; 44), that the hollow profiles (36; 44) are brought out both upwards and downwards beyond the crosspieces (33), whilst the crossribs (34, 35; 45) lie merely above these crosspieces, and that the hollow profiles (37) provided as corner-stiffeners are connected to the crosspieces (33) merely on top.

2. A storage and transport box as in Claim 1,
**characterized in that**
the fillets (38) strengthened by the crosswebs (32) are made at least double-walled (38a, 38b).

3. A storage and transport box as in one of the Claims 1 to 2,
**characterized in that**
the fillets (38) and the crosspieces (33) carrying them define at each end adjacent to the longitudinal walls (14, 15) an opening directed towards the side and downwards.

4. A storage and transport box as in one of the Claims 1 to 3,
**characterized in that**
the bottom (11) exhibits on the underside a latticelike strengthening ribbing (17, 21).

5. A storage and transport box as in one of the Claims 1 to 3,
**characterized in that**
the bottom (11) is underpinned by a supporting-plate (51) which exhibits a uniform wavy or corrugated profile and rests near its longitudinal edges upon supporting fillets (50) directed inwards from the longitudinal walls (12, 13) (Figures 11 and 12).

6. A storage and transport box as in one of the Claims 1 to 4,
**characterized in that**
the bottom (11) is underpinned in places by tubes or profiled rods (23) which at least at their ends are held in sleeve bodies (22) moulded onto the longitudinal walls (11, 12) and the bottom (11) (Figures 2, 3 and 6).

7. A storage and transport box as in one of the Claims 1 to 6,
**characterized in that**
the inner faces of the crosspiece (33) and fillet (38) as well as the outer face of the crosswall (14, 15) in the region of the fillet (38) are strengthened and protected by a metal profile (42) open downwards, the boundary edges of the metal profile (42) being embedded in the plastics material (Figures 8, 9 and 12).

8. A storage and transport box as in one of the Claims 1 to 7,
**characterized in that**
the inner face of the fillet (38) at the ends next to the longitudinal walls (12, 13) is provided with rounded edges (41) (Figures 4, 8 and 9).

9. A storage and transport box as in one of the Claims 1 to 4,
**characterized in that**
the bottom (11) exhibits at the underside of it a stiffening frame (18) adjoining the longitudinal walls (12, 13) and crosswalls (14, 15), which across a predetermined width (19) is provided with supporting and/or running areas lying in the same plane and having parallel faces, whilst the panel (20) in the middle of the bottom, adjoining this stiffening frame (18), is equipped at the underside with strengthening ribs (21) running in a concave arch (Figure 5).

10. A storage and transport box as in one of the Claims 4 and 9,
**characterized in that**
both the stiffening frame (18) and the stiffening ribs (21) in the panel (20) in the middle of the bottom are formed by a lattice of flat webs standing on edge.

11. A storage and transport box as in one of the Claims 4, 9, and 10,
**characterized in that**
the webs of the stiffening ribbing (17) in the region of the stiffening frame (18) and the webs of the stiffening ribbing (21) of the panel in the middle of the bottom run at right angles to one another and that furthermore in the lattice of the stiffening frame (18) further diagonal webs are formed (Figures 4, 8 and 9).

12. A storage and transport box as in one of the Claims 4 and 9 to 11,
**characterized in that**
the stiffening frame (18) with its flat webs is moulded in one piece onto the underside of the bottom.

13. A storage and transport box as in one of the Claims 4 and 6 as well as 9 to 12,
**characterized in that**
the push-in or plug-in channels or sleeve bodies (22) for receiving the stiffening profiles (23) are provided in addition to the stiffening frame (18).

14. A storage and transport box as in one of the Claims 1 to 4,
**characterized in that**
the longitudinal walls (12, 13) are provided at a distance from their top edge with at least one stiffening rib (24) running horizontally and in the region of their bottom have at least two horizontal stiffening ribs or webs (25 and 27) running in parallel (Figures 2, 5 and 7).

15. A storage and transport box as in one of the Claims 1 to 14,
**characterized in that**
the stiffening ribs (24) have a web height which is at least equal to the height of the stiffening rib (25) lying in the region of the bottom (11) (Figures 5 to 7).

16. A storage and transport box as in one of the Claims 1 to 15,
**characterized in that**
a number of stiffening ribs (26) running vertically in parallel up the full height of the longitudinal walls (12, 13) are provided, their web height corresponding with at least the web height of the adjacent horizontal strengthening ribs (24 and 25).

17. A storage and transport box as in one of the Claims 1 to 16,
**characterized in that**
the crosswalls (14, 15) are provided at the outside of their top edges with stiffening ribs (30, 31, 32) which have vertical endfaces lying in about the same plane.

18. A storage and transport box as in one of the Claims 1 to 17,
**characterized in that**
at least the longitudinal walls (13, 14) are provided at the top edge on the inside with a stacking-step (28).

19. A storage and transport box as in Claims 18,
**characterized in that**
both at the bottom (11) and at the top edges of the longitudinal walls (12, 13) stacking-steps (27 and 28) are provided, which in the region of the bottom consist of webs (25, 27) projecting outwards and in the region of the top of the longitudinal walls of angular edges (28) projecting outwards, so that upon placing two boxes on top of one another the stacking-edges (27 and 28) interengage, the angular edges (28) projecting by the height of the stiffening ribs and a further horizontal web (25) being arranged in the plane of the bottom above the web (27) at a distance from it.

20. A storage and transport box as in Claim 19,
**characterized in that**
the bottom boundary edges of the web (27) and strengthening rib (25) have a distance apart which is equal to the height of profile of the angular edges (28) (Figure 7).

21. A storage and transport box as in one of the Claims 19 and 20,
**characterized in that**
the width of the strengthening rib (25) corresponds at least with the total width of the angular edge (28) (Figure 7).

22. A storage and transport box as in one of the Claims 19 to 21,
**characterized in that**
the clear space between the web (27) and the strengthening rib (25) lying above it is dimensioned to be greater than the height of cross-section of the prong of the fork of a forklift truck.

23. A storage and transport box as in one of the Claims 19 to 22,
**characterized in that**
the upper boundary of the stacking-edge at the bottom is formed by the horizontal stiffening rib (25) (Figure 7).

24. A storage and transport box as in one of the Claims 19 to 23,
**characterized in that**
the horizontal strengthening rib (25) is supported by a number of vertical strengthening ribs (26) up to against the angular edge (28) of the upper stacking-step (Figures 2, 5 and 6).

**Revendications**

1. Caisson de stockage et de transport destiné à des entrepôts équipés de rayonnages et de dispositifs de chargement et de déchargement automatiques ainsi que d'appareils de transport correspondants et/ou des trajets de transfert, dans lequel deux parois longitudinales et deux parois transversales forment, avec un fond, un récipient en forme de caisson qui comporte, du côté du fond, des éléments d'appui et de guidage pour l'interaction avec des rails de support et/ou de guidage agencés dans les rayonnages et qui est équipé, à au moins une paroi transversale, à hauteur du fond, de moyens d'engagement pour les organes de chargement et de déchargement des dispositifs de chargement et de déchargement, caractérisé en ce que le fond (11), les parois longitudinales (12,13) et les parois transversales (14,15) ainsi que les moyens d'engagement des organes de chargement et de déchargement agencés à l'extérieur des parois transversales (14, 15) sont constitués d'une seule pièce moulée par injection de matière synthétique, en ce que les éléments d'engagement (10) des organes de chargement et de déchargement (8,9) consistent en des profilés (38) essentiellement parallèles aux parois transversales (14,15) et renforcés par des nervures transversales (38c), en ce que, de plus, ces profilés (38) sont reliés aux parois transversales (14,15) ainsi qu'éventuellement aux zones angulaires entre les parois transversales (14,15) et longitudinales (12,13) par des nervures transversales (33, 34, 39, 45) et/ou des profilés creux (36,37,44), en ce que les profilés (38) prolongent vers le bas des éléments en porte-à-faux (33) s'étendant approximativement horizontalement en partant des parois transversales (14,15) et reliés par le haut et par le bas par les nervures transversales (34,35,39,45) et/ou les profilés creux (36,37,44) aux parois transversales (14,15), en ce que les profilés creux (36,44) sont agencés vers le bas et vers le haut des éléments en porte-à-faux (33), tandis que les nervures transversales (34,35,45) ne se trouvent qu'au-dessus de ceux-ci, et en ce que les profilés creux (37) servant de montants angulaires de renforcement s'étendent uniquement vers le haut à partir des éléments en porte-à-faux (33).

2. Caisson de stockage et de transport selon la revendication 1 caractérisé en ce que les profilés (38) renforcés par les nervures transversales (32) comportent au moins des parois doubles (38a,38b).

3. Caisson de stockage et de transpor selon l'une des revendications 1 à 2 caractérisé en ce que les profilés (38) et les éléments en porte-à-faux (33) les portant délimitent aux extrémités adjacentes aux parois longitudinales (14,15) chaque fois une ouverture (46) orientée vers le côté et vers le bas.

4. Caisson de stockage et de transport selon l'une des revendications 1 à 3 caractérisé en ce que le fond (11) comporte sur sa face inférieure un renforcement par nervures en forme de treillis (17,21).

5. Caisson de stockage et de transport selon l'une des revendications 1 à 3 caractérisé en ce que le fond (11) est dédoublé par le bas par une plaque de support (51) qui présente un profilé ondulé ou mouluré régulier , et qui repose, à proximité de ses arêtes longitudinales, sur des profilés de support (50) des parois longitudinales (12,13), orientés vers l'intérieur (figures 11 et 12).

6. Caisson de stockage et de transport selon l'une des revendications 1 à 4 caractérisé en ce que le fond (11) comporte par endroit, à sa face inférieure, des tubes ou barres profilées (23), qui sont maintenues au moins par leurs extrémités dans des douilles (22) solidaires des parois longitudinales (11,12) et du fond (11)(figures 2,3 et 6).

7. Caisson de stockage et de transport selon l'une des revendications 1 à 6 caractérisé en ce que les faces internes de l'élément en porte-à-faux (33) et du profilé interne (38) ainsi que la face extérieure des parois transversales (14,15) située aux environs du profilés (38) sont renforcées et appuyées par un profilé métallique ouvert vers le bas (42), les arêtes extérieures du profilé métallique (42) étant logées dans la matière synthétique (figures 8, 9 et 12).

8. Caisson de stockage et de transport selon l'une des revendications 1 à 7 caractérisé en ce que la surface interne du profilé (38) est munie d'arrondis (41) aux extrémités de celui-ci, qui sont adjacentes aux parois longitudinales (12,13).

9. Caisson de stockage et de transport selon la revendication 4 caractérisé en ce que le fond (11) comporte, à sa face inférieure, un cadre de renforcement (18) qui se raccorde aux parois longitudinales (12,13) et transversales (14,15) et qui est muni, sur une largeur prédéterminée (19) de surfaces de roulement et/ou d'appui plan-parallèles situées dans le même plan; tandis que la zone médiane (20) se raccordant audit cadre de renforcement (18) est munie, sur la face inférieure, de nervures de renforcement (21) bombées de manière concave (figure 5).

10. Caisson de stockage et de transport selon l'une des revendications 4 et 9 caractérisé en ce que le cadre de renforcement (18) et les nervures de renforcement (21) dans la zone médiane du fond (20) sont constitués par des nervures planes montées sur chant et formant un grillage.

11. Caisson de stockage et de transport selon l'une des revendications 4, 9 et 10, caractérisé en ce que les nervures de renforcement (17) dans la zone de cadre de renforcement (18) et les nervures de renforcement (21) de la zone médiane du fond sont perpendiculaires l'une par rapport à l'autre et en ce que le grillage du cadre de renforcement (18) est encore équipé de nervures diagonales (figures 4,8 et 9).

12. Caisson de stockage et de transport selon l'une des revendications 4, 9 et 11, caractérisé en ce que le cadre de renforcement (18) comportant les nervures planes est agencé d'une seule pièce à la face inférieure du fond.

13. Caisson de stockage et de transport selon l'une des revendications 4 et 6 ainsi que 9 à 12 caractérisé en ce que les canaux de passage ou d'introduction ou les douilles (22) destinées au logement des profilés de renforcement (23) sont encore prévus en plus du cadre de renforcement (18).

14. Caisson de stockage et de transport selon l'une des revendications 1 à 13 caractérisé en ce que les parois longitudinales (12,13) sont munies à distance de leur bord supérieur, d'au moins une nervure de renforcement horizontale (24) et, dans la zone de fond, d'au moins deux nervures de renforcement (25 et 27) horizontales parallèles (voir figures 2, 5 et 7).

15. Caisson de stockage et de transport selon l'une des revendications 1 à 14 caractérisé en ce que les nervures de renforcement (24) présentent une hauteur qui est au moins égale à la hauteur de la nervure (25) située dans la zone de fond(4) (voir figure 5 à 7).

16. Caisson de stockage et de transport selon l'une des revendications 1 à 15 caractérisé en ce que plusieurs nervures de renforcement (26) verticales et parallèles s'étendent sur toute la hauteur des parois longitudinales (12,13), la hauteur desdites nervures correspondant chaque fois au moins à la hauteur de nervure des nervures horizontales adjacentes (24 et 25).

17. Caisson de stockage et de transport selon l'une des revendications 1 à 16 caractérisé en ce que les parois transversales (14,15) sont munies à leur bord supérieur de nervures de renforcement (30,31,32) qui sont orientées vers l'extérieur et qui présentent des surfaces frontales verticales disposées approximativement dans un même plan.

18. Caisson de stockage et de transport selon l'une des revendications 1 à 17 caractérisé en ce qu'au moins les parois longitudinales (13,14) sont munies à leur bord supérieur d'un épaulement d'empilage interne.

19. Caisson de stockage et de transport selon la revendication 18 caractérisé en ce que des épaulements d'empilage (27 et 28) sont prévus dans le fond (11) ainsi qu'aux arêtes supérieures des parois longitudinales (12,13), et consistent, dans la zone de fond, en des nervures faisant saillie vers l'extérieur (25,27) et, dans la zone supérieure des parois longitudinales, en des arêtes angulaires (28) faisant saillie vers l'extérieur, les bords d'empilage (27 et 28) s'engageant l'un dans l'autre lors de l'empilage de deux caissons (2) et les arêtes angulaires (28) faisant saillie d'une hauteur correspondant à celle des nervures de renforcement, une autre nervure horizontale (25) étant agencée dans le plan du fond, au-dessus de la nervure (27), à distance de celle-ci.

20. Caisson de stockage et de transport selon la revendication 19 caractérisé en ce que les arêtes inférieures de la nervure (27) et de la nervure de renforcement (25) ont une distance l'une de l'autre qui correspond à la hauteur du profilé des arêtes angulaires (28) (figure 7).

21. Caisson de stockage et de transport selon l'une des revendications I9 et 20 caractérisé en ce que la largeur de la nervure de renforcement (25) correspond au moins à la largeur totale des arêtes angulaires (28) (figure 7).

22. Caisson de stockage et de transport selon l'une des revendications 19 à 21 caractérisé en ce que la distance d'ouverture entre la nervure (27) et la nervure de renforcement (25) située au-dessus de celle-ci est supérieure à la hauteur de la section des branches de fourche d'un chariot élévateur.

23. Caisson de stockage et de transport selon l'une des revendications I9 à 22 caractérisé en ce que la limite supérieure du bord d'empilement situé du côté du fond est formée par la nervure de renforcement horizontale (25) (figure 7).

24. Caisson de stockage et de transport selon l'une des revendications 19 à 23 caractérisé en ce que la nervure de renforcement horizontale (25) s'appuie contre l'arête angulaire (28) de l' épaulement d'empilage supérieur via plusieurs nervures de renforcement verticales (26).

FIG.1

FIG.2

FIG.3

FIG.4

FIG.5

FIG.6

FIG.7

FIG.8

FIG.9

FIG.10

FIG.11

FIG.12

FIG.13